# FASCICULE DE BREVET EUROPEEN

(11) **EP 3 827 406 B1**
(45) Date de publication et mention de la délivrance du brevet: **13.11.2024**
(21) Numéro de dépôt: 19736742.8
(22) Date de dépôt: 10.07.2019
(51) Int. Cl.: G06N 3/08, G06T 5/60, G06T 7/00, G06T 15/04, G06N 3/045

(54) **PROCEDE D'ENRICHISSEMENT D'UNE BASE D'APPRENTISSAGE**
VERFAHREN ZUR VERVOLLSTÄNDIGUNG EINER LERNBASIS
METHOD FOR ENRICHING A LEARNING BASE

(30) Priorité: 13.07.2018 FR 1856497; 13.07.2018 FR 1856498; 21.12.2018 FR 1873792
(43) Date de publication de la demande: 02.06.2021
(73) Titulaire: Dental Monitoring, 75017 Paris (FR)
(72) Inventeur: SALAH, Philippe, 75020 PARIS (FR); DEBRAUX, Laurent, 75020 PARIS (FR); GHYSELINCK, Guillaume, 59169 CANTIN (FR); PELLISSARD, Thomas, 75004 PARIS (FR)
(74) Mandataire: Novagraaf Group
(86) Numéro de dépôt international: PCT/EP2019/068561
(87) Numéro de publication internationale: WO 2020/011865

(56) Documents cités:
- US-A1- 2018 168 780
- XIAODONG HE ET AL: "Deep Learning for Image-to-Text Generation: A Technical Overview", IEEE SIGNAL PROCESSING MAGAZINE, vol. 34, no. 6, 1 November 2017 (2017-11-01), USA, pages 109 - 116, XP055462086, ISSN: 1053-5888, DOI: 10.1109/MSP.2017.2741510
- KARPATHY ANDREJ ET AL: "Deep visual-semantic alignments for generating image descriptions", 2015 IEEE CONFERENCE ON COMPUTER VISION AND PATTERN RECOGNITION (CVPR), IEEE, 7 June 2015 (2015-06-07), pages 3128 - 3137, XP032793761, DOI: 10.1109/CVPR.2015.7298932
- QI WU ET AL: "Image Captioning and Visual Question Answering Based on Attributes and Their Related External Knowledge", ARXIV.ORG, CORNELL UNIVERSITY LIBRARY, 201 OLIN LIBRARY CORNELL UNIVERSITY ITHACA, NY 14853, 9 March 2016 (2016-03-09), XP080688148
- LI YU ET AL: "Unsupervised Local Facial Attributes Transfer Using Dual Discriminative Adversarial Networks", 2018 IEEE INTERNATIONAL CONFERENCE ON MULTIMEDIA AND EXPO (ICME), IEEE, 23 July 2018 (2018-07-23), pages 1 - 6, XP033417638, DOI: 10.1109/ICME.2018.8486562
- PAUL UPCHURCH ET AL: "Deep Feature Interpolation for Image Content Changes", ARXIV.ORG, CORNELL UNIVERSITY LIBRARY, 201 OLIN LIBRARY CORNELL UNIVERSITY ITHACA, NY 14853, 17 November 2016 (2016-11-17), XP080732363, DOI: 10.1109/CVPR.2017.645

## Description

### Domaine technique

La présente invention concerne le domaine de l'analyse de photos d'arcades dentaires. Elle se rapporte en particulier à un procédé pour créer une base d'apprentissage destinée à l'entrainement d'un réseau de neurones destiné à effectuer une telle analyse.

### Technique antérieure

Les techniques les plus récentes utilisent des réseaux de neurones pour évaluer des situations dentaires à partir d'images, classiquement des radiographies, notamment pour l'identification *post mortem.*

Un « réseau de neurones » ou « réseau neuronal artificiel » est un ensemble d'algorithmes bien connu de l'homme de l'art. Le réseau de neurones peut être en particulier choisi parmi :
- les réseaux spécialisés dans la classification d'images, appelés « CNN » (« Convolutional neural network »), par exemple
   - AlexNet (2012)
   - ZF Net (2013)
   - VGG Net (2014)
   - GoogleNet (2015)
   - Microsoft ResNet (2015)
   - Caffe: BAIR Référence CaffeNet, BAIR AlexNet
   - Torch:VGG_CNN_S,VGG_CNN_M,VGG_CNN_M_2048,VGG_CNN_M_10 24,VGG_CNN_M_128,VGG_CNN_F,VGG ILSVRC-2014 16-layer,VGG ILSVRC-2014 19-layer,Network-in-Network (Imagenet & CIFAR-10)
   - Google : Inception (V3, V4).
- les réseaux spécialisés dans la localisation, et détection d'objets dans une image, les Object Détection Network, par exemple:
   - R-CNN (2013)
   - SSD (Single Shot MultiBox Detector : Object Détection network), Faster R-CNN (Faster Region-based Convolutional Network method : Object Détection network)
   - Faster R-CNN (2015)
   - SSD (2015).

La liste ci-dessus n'est pas limitative.

Pour être opérationnel, un réseau de neurones doit être entrainé par un processus d'apprentissage appelé « *deep learning »,* à partir d'une base d'apprentissage constituée d'un ensemble d'enregistrements comportant chacun une image et un descriptif de l'image. En présentant les enregistrements en entrée du réseau de neurones, ce dernier apprend progressivement comment générer un descriptif pour une image qu'on lui présente.

Par exemple, chaque enregistrement de la base d'apprentissage peut comporter une image d'une arcade dentaire et un descriptif identifiant, dans cette image, les représentations des dents, ou « zones de dent », et les numéros de dent correspondant. Classiquement, ces descriptifs sont générés par un opérateur qui délimite, au moyen d'un ordinateur, les zones de dent et qui, après avoir identifié la dent correspondante, par exemple « canine supérieure droite », leur affecte un numéro en conséquence. Cette opération est appelée « labelling ». Après avoir été entrainé, le réseau de neurones pourra ainsi identifier, sur une image qu'on lui présente, les représentations des dents et les numéros de dent correspondant.

La qualité de l'analyse réalisée par le réseau de neurones dépend directement du nombre d'enregistrements de la base d'apprentissage. Classiquement, la base d'apprentissage doit comporter plus de 10 000 enregistrements. Il existe un besoin pour la constitution rapide d'une telle base d'apprentissage.

La publication intitulée "Image Captioning and Visual Question Answering Based on Attributes and Their Related External Knowledge" de QI WU ET AL in arXiv.org 2016-03-09 Cornell University Library 201 Olin Library Cornell University Ithaca, NY 14853 , divulgue une méthode pour générer des légendes et des attributs relatifs à une image introduite dans un réseau de neurones convolutionnel, préalablement entraîné à cet effet.

La publication intitulée "Deep visual-semantic alignments for generating image descriptions", de KARPATHY ANDREJ ET AL , 2015 IEEE CONFERENCE ON COMPUTER VISION AND PATTERN RECOGNITION (CVPR), IEEE, 7 juin 2015, pages 3128-3137, divulgue un modèle qui génère une description en langage naturel d'une image et de ses régions.

La publication intitulée "Deep Learning for Image-to-Text Génération: A Technical Overview", de Xiaodong He ET AL: "IEEE Signal Processing Magazine, vol. 34, no. 6, 1 novembre 2017, pages 109-116, est un état de l'art sur les méthodes permettant de générer automatiquement en langage naturel une description d'une image.

Dans certains contextes dentaires, notamment dans le contexte de pathologies rares, la création d'un grand nombre d'enregistrements est rendue difficile par le nombre limité de photos produites, en particulier par les orthodontistes et les dentistes, et par le caractère généralement confidentiel de ces photos. Il existe donc un besoin pour un procédé permettant une analyse d'un contexte dentaire, au moyen d'un réseau de neurones, à partir d'une base d'apprentissage limitée.

Un but de l'invention est de répondre à ces besoins.

### Exposé de l'invention

### Résumé de l'invention

L'invention propose un procédé d'analyse d'une photo à analyser représentant une scène dentaire à analyser, ledit procédé comportant les étapes suivantes :
A) création d'une base d'apprentissage historique comportant plus de 1 000 enregistrements historiques, en mettant en oeuvre un procédé d'enrichissement d'une base d'apprentissage historique, ledit procédé d'enrichissement comportant les étapes suivantes :
   1) entraînement d'un premier réseau de neurones à transformer des premières photos de premières scènes dentaires en premières images hyperréalistes pour simuler l'effet d'un évènement dentaire sur lesdites premières scènes dentaires ;
   2) soumission, au premier réseau de neurones entrainé, d'une photo d'origine représentant une scène dentaire d'origine dans un contexte dentaire, de manière à obtenir une image finale représentant, de manière hyperréaliste, la scène dentaire d'origine après simulation de l'évènement dentaire ;
   3) création d'un descriptif de ladite image finale, ou « descriptif final » ;
   4) création d'un enregistrement historique constitué de l'image finale et du descriptif final, et ajout de l'enregistrement historique dans la base d'apprentissage historique ;
B) entraînement d'un deuxième réseau de neurones, au moyen de la base d'apprentissage historique ;
C) soumission au deuxième réseau de neurones entrainé, de la photo à analyser, de manière à obtenir un descriptif de la photo à analyser.

Comme on le verra plus en détail dans la suite de la description, le procédé d'enrichissement permet d'obtenir une base d'apprentissage historique comportant de nombreuses images représentant, avec la qualité de photos, des scènes dentaires dans des contextes dentaires pour lesquels peu de photos sont disponibles. La qualité de ces images permet avantageusement de les utiliser pour entrainer le deuxième réseau de neurones afin qu'il puisse rechercher, dans des photos à analyser, des motifs spécifiques au contexte dentaire.

Le procédé d'enrichissement peut encore comporter une ou plusieurs des caractéristiques optionnelles suivantes :
- l'évènement dentaire est choisi parmi une application d'un appareil orthodontique, un traitement dentaire, l'occurrence d'une pathologie, une modification d'une forme, d'une couleur ou d'une position d'une dent ou plusieurs dents et/ou de la langue et/ou de la gencive et/ou d'une arcade et/ou de l'articulation temporo-mandibulaire et/ou de la forme du visage, et/ou d'une relation entre les deux arcades, et une modification des conditions d'observations d'une première scène dentaire ;
- plus de 10 000 premières photos existent et, de préférence, sont publiques ;
- le contexte dentaire est celui d'une pathologie dentaire qui touche moins de 10% de la population et/ou pour lequel moins de 10 000 photos représentant un arcade dentaire victime de ladite pathologie dentaire existent et, de préférence, sont publiques ;
- la photo d'origine ne montre pas de symptômes de ladite pathologie ;
- le premier réseau de neurones est entraîné pour, à l'étape 2), seulement ajouter un ou plusieurs éléments sur la photo d'origine ;
- le premier réseau de neurones est entraîné pour, à l'étape 2), seulement ajouter un appareil orthodontique sur la photo d'origine ;
- à l'étape 1), on entraine plusieurs premiers réseaux de neurones, de préférence plus de 2, plus de 3, plus de 5 ou plus de 10 premiers réseaux de neurones, pour simuler l'effet de différents évènements dentaires, puis, à l'étape 2), on soumet la photo d'origine aux dits premiers réseaux de neurones entraînés de manière à générer plusieurs images finales ;
- les premières photos et/ou la photo d'origine sont des vues extra-orales prises au moyen d'un écarteur dentaire.

Lorsque le contexte dentaire est par exemple l'occurrence d'une pathologie rare, le deuxième réseau de neurones permet ainsi avantageusement d'évaluer si la scène dentaire sur la photo à analyser à analyser correspond à cette pathologie.

De préférence,
- avant l'étape C), la photo à analyser est prise par le patient avec son téléphone mobile,
- l'étape C) est mise en oeuvre par un ordinateur, intégré dans le téléphone mobile ou avec lequel le téléphone mobile peut communiquer,
- après l'étape C), l'ordinateur informe le patient, de préférence par l'intermédiaire du téléphone mobile, du résultat de l'analyse.

Les procédés sont réalisés par ordinateur. En particulier, les premier et deuxième réseaux de neurones sont créés, entraînés et mis en oeuvre par ordinateur. La soumission d'une photo à un réseau de neurones, la création d'un descriptif et l'ajout d'un enregistrement sont également des opérations réalisées au moyen d'un ordinateur, éventuellement avec l'assistance d'un opérateur, de préférence sans l'assistance d'un opérateur sinon pour lancer un programme d'ordinateur.

L'invention concerne donc également :
- un programme d'ordinateur comprenant des instructions de code de programme pour l'exécution d'une ou plusieurs étapes d'un procédé quelconque selon l'invention, lorsque ledit programme est exécuté par un ordinateur,
- un support informatique sur lequel est enregistré un tel programme, par exemple une mémoire ou un CD-ROM.

### Définitions

Un « patient » est une personne pour laquelle un procédé selon l'invention est mis en oeuvre, indépendamment du fait que cette personne suive un traitement orthodontique ou non.

Une « situation dentaire » définit un ensemble de caractéristiques relatives à une arcade dentaire, par exemple la position des dents, leur forme, la position d'un appareil orthodontique, etc. Un « contexte dentaire » caractérise un ensemble de situations dentaires, par exemple caractérise une pathologie. Un contexte dentaire peut être par exemple celui d'une malocclusion.

Une « image » est une représentation, en deux dimensions et formée de pixels, d'une scène dentaire. Une « photo » est donc une image particulière, classiquement en couleurs, prise avec un appareil photo. Par « appareil photo », on entend tout appareil permettant de prendre une photo, ce qui inclut une caméra, un téléphone mobile, une tablette ou un ordinateur.

Une « image hyperréaliste » est une image qui n'est pas une photo mais qui semble être une photo.

Une « scène » est constituée par un ensemble d'éléments qui peuvent être observés simultanément. Une « scène dentaire » est une scène comportant au moins une partie d'une arcade dentaire.

Par « image d'une arcade », « photo d'une arcade », « représentation d'une arcade », etc. on entend une image, une photo, une représentation, etc. de tout ou partie de ladite arcade dentaire.

Un « écarteur » (« retractor » en anglais) est un dispositif qui comporte un rebord supérieur et un rebord inférieur s'étendant autour d'une ouverture d'écarteur. En position de service, les lèvres supérieure et inférieure du patient sont en appui sur les rebords supérieur et inférieur, respectivement. L'écarteur est configuré de manière à écarter élastiquement l'une de l'autre les lèvres supérieure et inférieure, de manière à dégager les dents visibles à travers l'ouverture. Un écarteur permet ainsi d'observer les dents sans être gêné par les lèvres. Les dents ne reposent cependant pas sur l'écarteur, de sorte que le patient peut, en tournant la tête par rapport à l'écarteur, modifier les dents qui sont visibles à travers l'ouverture de l'écarteur. Il peut aussi modifier l'écartement entre les arcades. De préférence, l'écarteur comporte des oreilles d'écartement des joues, ce qui permet d'observer les faces vestibulaires des dents au fond de la bouche, comme les molaires.

Une « base d'apprentissage » est une base d'enregistrements informatiques adaptée à l'entrainement d'un réseau de neurones. Chaque enregistrement comporte un objet, par exemple une image, et des informations sur cet objet, ou « descriptif ». Un descriptif comporte des valeurs pour des attributs de l'objet. Par exemple, un attribut d'une image d'une scène dentaire peut servir à identifier les numéros des dents représentées. L'attribut est alors « numéro de dent » et pour chaque dent, la valeur de cet attribut est le numéro de cette dent. Un attribut d'une image d'une scène dentaire peut aussi définir une pathologie dont souffre le patient, une classe d'occlusion, une position de la mandibule par rapport au maxillaire (« overbite » ou « overjet »), un indice d'hygiène globale ou un indice d'encombrement, par exemple.

Dans la présente description, les qualificatifs « historique », « premier », « deuxième », « courant », « rare », « d'origine », « final », et « d'analyse » sont utilisés à des fins de clarté.

Il faut interpréter "comprenant " ou "comportant " ou "présentant " de manière non restrictive, sauf indication contraire.

### Brève description des dessins

D'autres caractéristiques et avantages de l'invention apparaîtront encore à la lecture de la description détaillée qui va suivre et à l'examen du dessin annexé dans lequel :
[Fig 1] représente schématiquement, les différentes étapes d'un procédé d'enrichissement;
[Fig 2] représente schématiquement, les différentes étapes d'un procédé d'analyse selon l'invention ;
[Fig 3] représente une photo d'origine ;

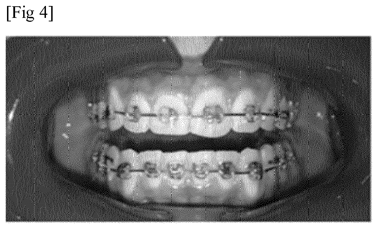

[Fig 4] représente une image finale obtenue au moyen d'un procédé à partir de la photo d'origine de la figure 3.

### Description détaillée

La description détaillée qui suit est celle de modes de réalisation préférés, mais n'est pas limitative.

### Procédé d'enrichissement

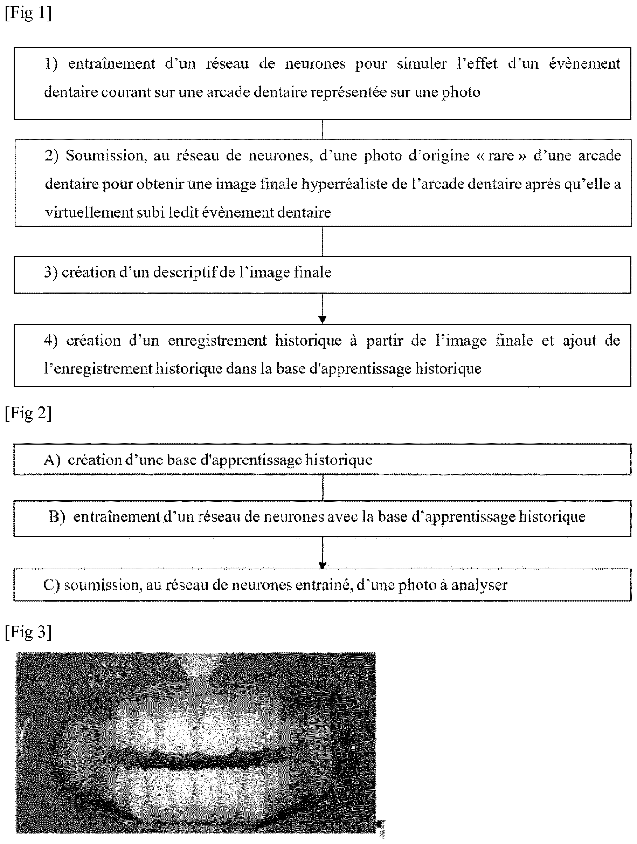

Comme illustré sur la figure 1, un procédé d'enrichissement d'une base d'apprentissage historique comporte les étapes 1) à 3).

**A l'étape 1),** on peut entrainer un premier réseau de neurones avec une première base d'apprentissage constituée d'un ensemble de premiers enregistrements, chaque premier enregistrement comportant :
- une première photo représentant une première scène dentaire ; et
- un premier descriptif précisant une valeur pour au moins un attribut de la première photo relatif à l'occurrence d'un événement dentaire pour la première scène dentaire ;
au moins une partie des premières photos représentant des premières scènes dentaires après qu'elles ont été soumises à l'évènement dentaire.

Le premier réseau de neurones peut être en particulier choisi dans la liste fournie en préambule de la présente description.

Les premières photos sont de préférence des vues extra-orales, par exemple des photos prises face au patient, de préférence avec un écarteur dentaire.

L'événement dentaire peut être par exemple la pose d'un appareil orthodontique. La valeur dudit attribut indique alors si un appareil orthodontique est représenté sur la première photo. L'attribut peut être par exemple « présence d'un appareil orthodontique » et prendre les valeurs « oui » ou « non ».

L'événement dentaire est de préférence « courant », c'est-à-dire largement répandu.

De préférence, plus de 500, plus de 1 000, plus de 5 000, de préférence plus de 10 000 photos représentant des scènes dentaires où une arcade dentaire a été soumise à l'évènement dentaire, par exemple à la pose d'un appareil orthodontique, existent, de préférence sont publiques.

L'événement dentaire peut être en particulier choisi parmi une application d'un appareil orthodontique, un traitement dentaire, en particulier orthodontique, thérapeutique ou non, l'occurrence d'une pathologie, et une modification
- d'une forme, d'une couleur ou d'une position d'une dent ou plusieurs dents et/ou de la langue et/ou de la gencive et/ou d'une arcade et/ou de l'articulation temporo-mandibulaire (ATM) et/ou de la forme du visage, et/ou
- d'une relation entre les deux arcades (par exemple modification du plan d'occlusion ou de la classe d'occlusion).

La première base d'apprentissage comporte de préférence plus de 1 000, plus de 5 000, de préférence plus de 10 000, de préférence plus de 30 000, de préférence plus de 50 000, de préférence plus de 100 000 premiers enregistrements. Plus le nombre d'enregistrements est élevé, meilleure est la capacité du premier réseau de neurones à modifier une photo de manière hyperréaliste.

L'entrainement du premier réseau de neurones au moyen de la première base d'apprentissage est bien connu de l'homme de l'art.

Par cet entrainement, le premier réseau de neurones apprend comment modifier, de manière hyperréaliste, une photo représentant une scène dentaire pour simuler l'évènement dentaire, par exemple, pour y ajouter la représentation d'un appareil orthodontique. Il permet donc de faire subir virtuellement l'évènement dentaire à la scène dentaire et d'en visualiser le résultat.

L'entrainement peut en particulier être effectué en suivant les enseignements de l'article de Zhu, Jun-Yan, et al. "Unpaired image-to-image translation using cycle-consistent adversarial networks " (Open access Computer Vision Foundation).

**A l'étape 2),** on soumet, au premier réseau de neurones, une photo d'origine (Fig. 3A) pour qu'il la transforme en une image finale hyperréaliste (Fig. 3B), c'est-à-dire qui semble être une photo, la transformation simulant l'évènement dentaire. Par exemple, il ajoute à la photo d'origine la représentation d'un appareil orthodontique.

La photo d'origine est de préférence une vue extra-orale, par exemple une photo prise face au patient, de préférence avec un écarteur dentaire.

La photo d'origine représente une scène dentaire d'origine dans un contexte dentaire, par exemple représente l'arcade dentaire d'un patient victime d'une pathologie « P ». De préférence, elle ne représente cependant pas une scène dentaire contenant une arcade ayant été soumise à l'évènement dentaire. Dans l'exemple considéré, elle ne représente pas une scène dentaire dans laquelle l'arcade porte un appareil orthodontique.

Dans un mode de réalisation préféré, le contexte dentaire est rare.

Le contexte dentaire rare est de préférence celui d'une pathologie dentaire, de préférence d'une pathologie qui touche moins de 10%, moins de 5%, moins de 2% ou moins de 1% de la population.

Le contexte dentaire peut être un contexte pour lequel moins de 10 000, moins de 5 000 ou moins de 1 000 photos existent ou sont publiques, c'est-à-dire accessibles par quiconque, éventuellement contre paiement. La difficulté d'accès peut notamment résulter de contraintes réglementaires ou de contraintes pratiques, par exemple pour prendre des photos illustrant le contexte dentaire.

De préférence, les photos illustrant le contexte dentaire montrent les symptômes d'une pathologie dentaire, par exemple d'une pathologie rare, par exemple qui touche moins de 10%, moins de 5%, moins de 2% ou moins de 1% de la population.

Lorsque le contexte dentaire est relatif à l'occurrence d'une pathologie, la photo d'origine peut montrer des symptômes de cette pathologie identifiables par un professionnel des soins dentaires, en particulier un orthodontiste, ou non.

Si elle ne représente pas de tels symptômes, elle représente cependant la scène dentaire d'origine dans ce contexte dentaire parce que la pathologie a été diagnostiquée avec d'autres moyens, par exemple à partir de clichés tomographiques, de préférence obtenus par tomographie informatisée à faisceau conique, en anglais CBCT pour *"cone beam computed tomography".* Par exemple, les photos montrent des arcades de patients victimes d'une rhizalyse.

Les photos illustrant le contexte dentaire étant peu nombreuses, il est difficile d'entraîner un réseau de neurones avec ces seules photos. L'étape 2) transforme avantageusement la photo d'origine en une image finale hyperréaliste qui représente le résultat de l'évènement dentaire s'il était appliqué à la scène dentaire d'origine.

En entrainant plusieurs premiers réseaux de neurones pour simuler différents évènements dentaires, puis en soumettant la photo d'origine à ces réseaux, il est possible de multiplier les images finales.

Des essais (Fig. 3A et 3B) ont montré que les images finales sont de très bonne qualité, de sorte qu'il est très difficile de détecter qu'il ne s'agit pas de photos.

**A l'étape 3),** on crée un descriptif « final » pour l'image finale résultant de l'étape 2). Il fournit une valeur pour au moins un attribut de l'image finale relatif à l'occurrence de l'évènement dentaire, et une valeur pour au moins un attribut de l'image finale relatif à l'évènement dentaire.

Par exemple, il précise que l'attribut « présence d'un appareil orthodontique » a la valeur « oui » et que l'attribut « présence de la pathologie P » à la valeur « oui ».

Le descriptif de l'image finale peut être réalisé à la main, au moins partiellement. De préférence, il est réalisé, au moins partiellement, par un programme d'ordinateur.

**A l'étape 4),** on crée un enregistrement historique constitué de l'image finale et du descriptif final, et on l'ajoute dans la base d'apprentissage historique. L'image finale et le descriptif final sont alors qualifiés d'image historique et de descriptif historique, respectivement.

La base d'apprentissage historique peut n'être constituée que d'enregistrements historiques générés suivant un procédé d'enrichissement. Alternativement, la base d'apprentissage historique peut comporter des enregistrements historiques générés suivant un procédé d'enrichissement et d'autres enregistrements historiques, par exemple créés suivant des procédés conventionnels, notamment par labellisation de photos, et notamment par labellisation des photos d'origine.

De préférence, le cycle des étapes 2) à 4) est répété, de préférence jusqu'à ce que la base d'apprentissage historique comporte plus de 5 000, de préférence plus de 10 000, de préférence plus de 30 000, de préférence plus de 50 000, de préférence plus de 100 000 enregistrements historiques.

### Analyse d'une photo d'analyse

Comme illustré sur la figure 2, pour analyser une photo à analyser, on procède suivant les étapes A) à C).

La photo à analyser est de préférence en couleurs, de préférence en couleurs réelles.

**A l'étape A),** on crée une base d'apprentissage historique comportant des enregistrements historiques obtenus suivant un procédé d'enrichissement.

**A l'étape B),** on entraine un deuxième réseau de neurones au moyen de la base d'apprentissage historique. Un tel entrainement est bien connu de l'homme de l'art.

Le deuxième réseau de neurones peut être en particulier choisi dans la liste fournie en préambule de la présente description.

Par cet entrainement, le deuxième réseau de neurones apprend à déterminer, pour les photos à analyser qu'on lui présente, des valeurs pour les attributs évalués dans les descriptifs historiques. Par exemple, chaque descriptif historique peut préciser une valeur (« oui » ou « non ») pour l'attribut « présence de la pathologie P ». Le deuxième réseau de neurones apprend alors à déterminer si une photo à analyser qu'on lui soumet présente des motifs indiquant la présence de la pathologie P.

**A l'étape C),** on présente la photo à analyser au deuxième réseau de neurones, et on obtient ainsi une évaluation pour les différents attributs, par exemple « oui », avec une probabilité de plus de 99%, pour la présence de la pathologie P.

Le procédé d'analyse peut être utilisé à des fins thérapeutiques ou non, par exemple à des fins de recherche ou à de fins purement esthétiques.

Il peut être utilisé par exemple pour évaluer une situation dentaire d'un patient au cours d'un traitement orthodontique, ou d'un traitement de blanchiment des dents. Il peut être utilisé pour surveiller le déplacement de dents ou l'évolution d'une pathologie dentaire.

Dans un mode de réalisation, le patient prend la photo à analyser, par exemple avec son téléphone mobile, et un ordinateur, intégré dans le téléphone mobile ou avec lequel le téléphone mobile peut communiquer, met en oeuvre le procédé. Le patient peut ainsi demander très facilement une analyse de sa situation dentaire, sans même devoir se déplacer, en se contentant de transmettre une ou de préférence plusieurs photos de ses dents.

L'analyse d'une photo à analyser est notamment utile pour détecter une maladie rare. Comme cela apparaît clairement à présent, le premier réseau de neurones permet de transformer des photos d'origine représentant une scène dentaire d'origine dans un contexte dentaire, en des images finales représentant différemment la scène dentaire d'origine, la différence entre les images finales et les photos d'origine étant le résultat de la simulation de l'évènement dentaire. Il est ainsi possible de créer une base d'apprentissage historique riche, à partir de peu de photos d'origine, en y ajoutant ces images finales.

L'ajout d'images finales hyperréalistes permet ainsi d'enrichir très rapidement la base d'apprentissage historique.

Bien entendu, l'invention n'est pas limitée aux modes de réalisation décrits ci-dessus et représentés.

### Rééquilibrage d'une base d'apprentissage

En particulier, les étapes 1) à 4) peuvent être mises en oeuvre pour enrichir une base d'apprentissage historique afin de la « rééquilibrer ».

Par exemple, à l'étape 1), le premier réseau de neurones peut être entraîné à fournir des premières images hyperréalistes d'une arcade dentaire représentant cette arcade dans des conditions d'observation dites « simulées », en particulier suivant une direction d'observation dite « simulée », à partir de premières photos de l'arcade dentaire prises dans des premières conditions d'observation différentes des conditions d'observation simulées, en particulier suivant une première direction d'observation différente de la direction d'observation simulée.

Notamment, le premier réseau de neurones peut être entrainé à transformer des premières photos de premières scènes dentaires représentant certaines dents, par exemple les incisives, en premières images hyperréalistes représentant d'autres dents, par exemple des molaires.

L'événement dentaire est alors une modification des conditions d'observation de l'arcade dentaire, depuis les premières conditions d'observation mises en oeuvre pour acquérir les premières photos jusqu'aux conditions d'observation simulées. Le premier réseau de neurones est ainsi entrainé pour simuler l'effet de cette modification sur les premières scènes dentaires.

A l'étape 2), on soumet au premier réseau de neurones entrainé, une photo d'origine représentant une scène dentaire d'origine dans un contexte dentaire dans lequel la scène dentaire d'origine est observée dans les premières conditions d'observation, par exemple une photo d'origine représentant des incisives, sans que les molaires ne soient visibles.

Le premier réseau de neurones génère alors une image finale représentant, de manière hyperréaliste, la scène dentaire d'origine après simulation de l'évènement dentaire. Autrement dit, l'image finale représente, de manière hyperréaliste, la scène dentaire d'origine observée dans les conditions d'observation simulées. Par exemple, elle représente des molaires de l'arcade dentaire.

Les étapes 3) et 4) permettent de créer un descriptif de l'image finale et de l'associer à l'image finale pour constituer un enregistrement historique. L'enregistrement historique est ensuite ajouté dans la base d'apprentissage historique.

Si la base d'apprentissage historique comportait initialement une proportion excessive d'enregistrements relatifs à des images représentant des incisives, cet ajout contribue à augmenter le nombre d'enregistrements relatifs à des images représentant des molaires. La base d'apprentissage en est avantageusement mieux équilibrée.

Le patient n'est pas limité à un être humain. Un procédé selon l'invention peut être utilisé pour un autre animal.

Une base d'apprentissage n'est pas nécessairement constituée par des enregistrements de « paires ».

## Revendications

1. Procédé d'analyse d'une photo à analyser représentant une scène dentaire à analyser, ledit procédé comportant les étapes suivantes :
A) création d'une base d'apprentissage historique comportant plus de 1 000 enregistrements historiques, en mettant en oeuvre un procédé d'enrichissement d'une base d'apprentissage historique, ledit procédé d'enrichissement comportant les étapes suivantes :
1) entraînement d'un premier réseau de neurones à transformer des premières photos de premières scènes dentaires en premières images hyperréalistes pour simuler l'effet d'un évènement dentaire sur lesdites premières scènes dentaires ;
2) soumission, au premier réseau de neurones entrainé, d'une photo d'origine représentant une scène dentaire d'origine dans un contexte dentaire, de manière à obtenir une image finale représentant, de manière hyperréaliste, la scène dentaire d'origine après simulation de l'évènement dentaire ;
3) création d'un descriptif de ladite image finale, ou « descriptif final » ;
4) création d'un enregistrement historique constitué de l'image finale et du descriptif final, et ajout de l'enregistrement historique dans la base d'apprentissage historique ;
B) entraînement d'un deuxième réseau de neurones, au moyen de la base d'apprentissage historique;
C) soumission au deuxième réseau de neurones entrainé, de la photo à analyser, de manière à obtenir un descriptif de la photo à analyser.

2. Procédé selon la revendication précédente, dans lequel l'évènement dentaire est choisi parmi une application d'un appareil orthodontique, un traitement dentaire, l'occurrence d'une pathologie, une modification d'une forme, d'une couleur ou d'une position d'une dent ou plusieurs dents et/ou de la langue et/ou de la gencive et/ou d'une arcade et/ou de l'articulation temporo-mandibulaire et/ou de la forme du visage, et/ou d'une relation entre les deux arcades, et une modification des conditions d'observations d'une première scène dentaire.

3. Procédé selon l'une quelconque des revendications précédentes, dans lequel plus de 10 000 premières photos sont publiques.

4. Procédé selon l'une quelconque des revendications précédentes, dans lequel le contexte dentaire est celui d'une pathologie dentaire qui touche moins de 10% de la population et/ou pour lequel moins de 10 000 photos représentant un arcade dentaire victime de ladite pathologie dentaire sont publiques.

5. Procédé selon la revendication précédente, dans lequel les photos publiques ne montrent pas les symptômes de ladite pathologie dentaire.

6. Procédé selon l'une quelconque des revendications précédentes, dans lequel le premier réseau de neurones est entrainé pour, à l'étape 2), seulement ajouter un ou plusieurs éléments sur la photo d'origine.

7. Procédé selon la revendication précédente, dans lequel le premier réseau de neurones est entraîné pour, à l'étape 2), seulement ajouter un appareil orthodontique sur la photo d'origine.

8. Procédé selon l'une quelconque des revendications précédentes, dans lequel, à l'étape 1), on entraine plusieurs premiers réseaux de neurones pour simuler l'effet de différents évènements dentaires, puis, à l'étape 2), on soumet la photo d'origine aux dits premiers réseaux de neurones entrainés de manière à générer plusieurs images finales.

9. Procédé selon l'une quelconque des revendications précédentes, dans lequel les premières photos et/ou la photo d'origine sont des vues extra-orales prises au moyen d'un écarteur dentaire.

10. Procédé selon l'une quelconque des revendications précédentes, dans lequel :
- avant l'étape C), la photo à analyser est prise par le patient avec son téléphone mobile,
- l'étape C) est mise en oeuvre par un ordinateur, intégré dans le téléphone mobile ou avec lequel le téléphone mobile peut communiquer,
- après l'étape C), l'ordinateur informe le patient, de préférence par l'intermédiaire du téléphone mobile, du résultat de l'analyse.

11. Procédé selon l'une quelconque des revendications précédentes, la base d'apprentissage étant constituée par des enregistrements de « paires ».

## Patentansprüche

1. Verfahren zum Analysieren eines zu analysierenden Fotos, das eine zu analysierende Dentalszene abbildet, das Verfahren umfassend die folgenden Schritte:
A) Erstellen einer historischen Lernbasis, umfassend mehr als 1.000 historische Aufzeichnungen, durch operatives Umsetzen eines Verfahrens zum Vervollständigen einer historischen Lernbasis, das Verfahren zum Vervollständigen umfassend die folgenden Schritte:
1) Trainieren eines ersten neuronalen Netzes, um erste Fotos von ersten Dentalszenen in erste hyperrealistische Bilder umzuwandeln, um die Wirkung eines Dentalereignisses auf die ersten Dentalszenen zu simulieren;
2) Vorlegen, gegenüber dem ersten trainierten neuronalen Netz, eines ursprünglichen Fotos, das eine ursprüngliche Dentalszene in einem Dentalkontext darstellt, sodass ein endgültiges Bild erhalten wird, das die ursprüngliche Dentalszene auf hyperrealistische Weise nach der Simulation des Dentalereignisses darstellt;
3) Erstellen einer Beschreibung des endgültigen Bilds oder einer "endgültigen Beschreibung";
4) Erstellen einer historischen Aufzeichnung, die aus dem endgültigen Bild und der endgültigen Beschreibung besteht, und Hinzufügen der historischen Aufzeichnung zu der historischen Lernbasis;
B) Trainieren eines zweiten neuronalen Netzes mittels der historischen Lernbasis;
C) Vorlegen, gegenüber dem zweiten trainierten neuronalen Netz, des zu analysierenden Fotos, sodass eine Beschreibung des zu analysierenden Fotos erhalten wird.

2. Verfahren nach dem vorstehenden Anspruch, wobei das Dentalereignis ausgewählt wird aus einer Anwendung einer kieferorthopädischen Einrichtung, einer Dentalbehandlung, dem Auftreten einer Pathologie, einer Modifikation einer Form, einer Farbe oder einer Position eines Zahns oder mehrerer Zähne und/oder der Zunge und/oder des Zahnfleisches und/oder eines Bogens und/oder des Kiefergelenks und/oder der Gesichtsform und/oder einer Beziehung zwischen den zwei Bögen und einer Modifikation von Beobachtungsbedingungen einer ersten Dentalszene.

3. Verfahren nach einem der vorstehenden Ansprüche, wobei mehr als 10.000 erste Fotos öffentlich sind.

4. Verfahren nach einem der vorstehenden Ansprüche, wobei der Dentalkontext derjenige einer Dentalpathologie ist, die weniger als 10 % der Bevölkerung betrifft und/oder für die weniger als 10.000 Fotos, die einen Dentalbogen abbilden, der Opfer der Dentalpathologie ist, öffentlich sind.

5. Verfahren nach dem vorstehenden Anspruch, wobei die öffentlichen Fotos die Symptome der Dentalpathologie nicht zeigen.

6. Verfahren nach einem der vorstehenden Ansprüche, wobei das erste neuronale Netz trainiert wird, um in Schritt 2) nur ein oder mehrere Elemente zu dem ursprünglichen Foto hinzuzufügen.

7. Verfahren nach dem vorstehenden Anspruch, wobei das erste neuronale Netz trainiert wird, um in Schritt 2) nur eine kieferorthopädische Einrichtung zu dem ursprünglichen Foto hinzuzufügen.

8. Verfahren nach einem der vorstehenden Ansprüche, wobei in Schritt 1) mehrere erste neuronale Netze trainiert werden, um die Wirkung unterschiedlicher Dentalereignisse zu simulieren, dann in Schritt 2) das ursprüngliche Foto den ersten trainierten neuronalen Netzen vorgelegt wird, um mehrere endgültige Bilder zu erzeugen.

9. Verfahren nach einem der vorstehenden Ansprüche, wobei die ersten Fotos und/oder das ursprüngliche Foto extraorale Ansichten sind, die mittels eines Wangenhalters aufgenommen werden.

10. Verfahren nach einem der vorstehenden Ansprüche, wobei:
- vor Schritt C) das zu analysierende Foto durch den Patienten mit seinem Mobiltelefon aufgenommen wird,
- Schritt C) durch einen Computer operativ umgesetzt wird, der in dem Mobiltelefon integriert ist oder mit dem das Mobiltelefon kommunizieren kann,
- nach Schritt C) der Computer den Patienten, vorzugsweise über das Mobiltelefon, über das Ergebnis der Analyse informiert.

11. Verfahren nach einem der vorstehenden Ansprüche, wobei die Lernbasis aus "Paar"-Aufzeichnungen besteht.

## Claims

1. Method for analyzing a photograph to be analyzed representing a dental scene to be analyzed, said method comprising the following steps:
A) creating a historical learning base comprising more than 1,000 historical records, by implementing an enrichment method for a historical learning base, said enrichment method comprising the following steps:
1) training a first neural network to convert first photographs of first dental scenes into first hyperrealistic images to simulate the effect of a dental event on said first dental scenes;
2) submitting, to the first trained neural network, an original photograph representing an original dental scene in a dental context, so as to obtain a final image representing, in a hyperrealistic manner, the original dental scene after simulation of the dental event;
3) creating a description of said final image, or "final description";
4) creating a historical record consisting of the final image and the final description, and adding the historical record to the historical learning database;
B) training a second neural network, using the historical learning base;
C) submitting the photograph to be analyzed to the second trained neural network, so as to obtain a description of the photograph to be analyzed.

2. Method according to the preceding claim, wherein the dental event is selected from an application of an orthodontic appliance, a dental treatment, the occurrence of a pathology, a change in shape, color or position of one or more teeth and/or the tongue and/or the gum and/or an arch and/or the temporomandibular joint and/or the face shape, and/or a relationship between the two arches, and a change in the observation conditions of a first dental scene.

3. Method according to either of the preceding claims, wherein more than 10,000 first photographs are public.

4. Method according to any of the preceding claims, wherein the dental context is that of a dental pathology affecting less than 10% of the population and/or for which less than 10,000 photographs representing a dental arch victim of said dental pathology are public.

5. Method according to the preceding claim, wherein the public photographs do not show the symptoms of said dental pathology.

6. Method according to any of the preceding claims, wherein the first neural network is trained to, in step 2), only add one or more elements to the original photograph.

7. Method according to the preceding claim, wherein the first neural network is trained to, in step 2), only add an orthodontic appliance to the original photograph.

8. Method according to any of the preceding claims, wherein, in step 1), multiple first neural networks are trained to simulate the effect of different dental events, then, in step 2), the original photograph is subjected to said trained first neural networks so as to generate multiple final images.

9. Method according to any of the preceding claims, wherein the first photographs and/or the original photograph are extra-oral views taken by means of a mouthpiece.

10. Method according to any of the preceding claims, wherein:
- before step C), the photograph to be analyzed is taken by the patient using his or her mobile phone,
- step C) is implemented by a computer, which is integrated into the mobile phone or with which the mobile phone can communicate,
- after step C), the computer informs the patient, preferably via the mobile phone, of the result of the analysis.

11. Method according to any of the preceding claims, with the learning base consisting of "pair" records.
